Europäisches Patentamt

European Patent Office

Office européen des brevets

(19)

(11) Veröffentlichungsnummer: **0 068 475**
**B1**

(12) **EUROPÄISCHE PATENTSCHRIFT**

(45) Veröffentlichungstag der Patentschrift: **07.06.89**

(21) Anmeldenummer: **82105685.0**

(22) Anmeldetag: **26.06.82**

(51) Int. Cl.⁴: **B 65 G 23/06**

(54) **Geräuschgedämpftes Plattenförderband.**

(30) Priorität: **04.07.81 DE 3126513**
**30.06.81 DE 3125698**

(43) Veröffentlichungstag der Anmeldung:
**05.01.83 Patentblatt 83/01**

(45) Bekanntmachung des Hinweises auf die
Patenterteilung:
**07.06.89 Patentblatt 89/23**

(84) Benannte Vertragsstaaten:
**AT BE CH DE FR GB IT LI NL SE**

(56) Entgegenhaltungen:
**DE-B-2 343 249**

(73) Patentinhaber: **Draadindustrie Jonge Poerink
B.V.
Postbus 4
NL-7620 AA Borne (NL)**

(72) Erfinder: **Jonge Poerink, Nicolaas
Prins Bernhardlaan 25
NL-7620 AA Borne (NL)**
Erfinder: **Radke, Manfred, Ing. grad.
Brüsseler Strasse Nr. 3
D-6081 Stockstadt (DE)**

(74) Vertreter: **Schulze Horn, Stefan, Dipl.-Ing. et al
Patentanwälte Dipl.-Ing. S. Schulze Horn M.SC.
Dr. H. Hoffmeister Goldstrasse 36
D-4400 Münster (DE)**

Courier Press, Leamington Spa, England.

## Beschreibung

Die Erfindung betrifft ein modulares Band, bestehend aus einer Vielzahl von platten- oder gitterförmigen Moduln aus Kunststoff, die an zwei gegenüberliegenden Modulrändern im Abstand voneinander mehrere geschlossene oder fast geschlossene Ösen aufweisen, die mit den Moduln eine Einheit bilden und jeweils in die Zwischenräume zwischen den Ösen benachbarter Moduln einshiebbar sind und mit diesen durch Querstäbe zum Band verbunden sind, wobei der Antrieb des Bandes durch Zahnräder erfolgt, die auf angetriebenen Wellen angeordnet sind und deren Zähne an an der Unterseite der Moduln angeordneten Vorsprüngen oder an den Össen angreifen oder in Vertiefungen der Moduln eingreifen.

Derartige Förderbänder sind seit langen bekannt und bahen sich bewährt. Für eine gradlinige Bandführung ist ein solches Band z.B. In der US—PS—3 785 476 und für ein gekrümmtes Band in der britischen Patentschrift 1 472 604 beschrieben.

Nachteilig ist bei diesen Förderbändern aber, daß bei ihrem Betrieb Lärm auftreten kann, der den Einsatz dieser Fördermittel in der Nähe oder an Arbeitsplätzen für Bedienungskräfte verhindert oder erschwert.

Aus der DE—A—3 001 964 ist ein Kettenrad, insbesondere für ein Motorrad bekannt, bei dem neben dem metallischen Radkörper an dessen beiden Seiten Glieder aus elastischem Werkstoff zur Schwinungsminderung angebracht sind, wobei jedes Glied eine Verbindungsfläche zu dem Radkörper mit einem annähernd dem Kerndurchmesser des Radkörpers entsprechenden Durchmesser aufweist und der Außendurchmesser jedes Gliedes in Richtung von der Verbindungsfläche zu einer Außenfläche des Gliedes zu zunehmend ausgebildet ist. Dadurch sollen die seitlich außenliegenden Abschnitte der Kette mit den Umfangsflächen der Glieder über einen großen Lastbereich in Berührung bringbar sein.

Nachteilig ist eine solche Ausgestaung aber nicht bei Förderbändern aus platten- oder gitterförmigen Moduln anwendbar, da diese Ebene bilden. Auch ist das Laufverhalten derselben weitgehend unterschiedlich.

Es ist demgemäß Aufgabe der Erfinding, ein Gliederförderband oder modulares Band zu schaffen, bei welchem mit relativ einfachen Mitteln die Geräuschentwicklung erheblich vermindert wird, so daß diese Bänder auch in geschlossenen Räumen einsetzbar sind, ohne daß das darin arbeitende Personal von Geräuschen unzumutbar belästigt wird. Die Geräuschdämpfungsmittel sollen weiterhin den Betrieb des Bandes und insbesonder den störungsfreien Betrieb des Bandes nicht behindern und die Antriebsleistung der Bänder nicht oder nur unwesentlich erhöhen sowie dauerhaft wirksam und verschleißunempfindlich sein.

Diese Aufgabe wird erfindungsgemäß bei den eingangs genannten Bändern dadurch gelöst, daß neben den Zahnrädern Geräuschdämpfungsscheiben aus leicht elastischer verformbarem Material angeordnet sind, deren Durchmesser mindestens dem Außendurchmesser des von den Zähnen der Antriebsräder gebildeten Kreises entspricht, wobei die Geräuschdämpfungsscheiben aus gasgefüllte Zellen enthaltendem Kunststoff bestehen und außen neben den Geräuschdämpfungsscheiben Stützscheiben auf festem Material angeordnet sind, deren Durchmesser geringer ist als der Durchmesser des von den Böden der Nuten der Zahnräder gebildeten Kreises.

Die Geräuschdämpfungsscheiben können weiterhin beidseitig jedes Antriebszahnrades angeordnet sein, ihre Breite ist vorteilhaft wesentlich größer als die der Antriebszahnräder.

Weitere vorteilhafte Ausgestaltungen der Erfindung sind in den Unteransprüche 4 bis 7 genannt.

Die mit der Erfinding erzielten Vorteile bestehen insbesondere darin, daß die Dämpfungselemente das harte Aufeinandertreffen von Antriebsmittel und Zugorgan dauerhaft verbindern und dadurch das Entstehen von gehörschädlichem Lärm unterbinden.

Vorteilhaft ist weiterhin das Verringern der Verschleißerskhneinungen zwischen Antriebsmittel und Zugorgan ohne zusätzliche maßnahem, da der für die Kraftübertragung nötige Formschluß nicht abrupt, sondern durch die progressive Federkennlinie der Dämpfungselemente allmählich erfolgt. Ein weiterer Vorteil ist das Unterdrükken von Longitudinal- sowie Transversal-Schwingungen, da die Dämpfungselemente für diese Schwingungen stark energieabsorbierend wirken.

Aufgrund dieser Vorteile wird beispielsweise der Einsatzbereich von mit Dämpfungselementen gemäß der Erfindung versfhenen Plattenförderern erweitert und gleichzeitig die Lebensdauer erhöht.

Ersichtlicherweise wird das erfindungsgamäße Ziel, nämlich eine wesentliche Geräuschdämpfung bei Gliederförderbändern zu erreichen, mit einfachen Mitteln gelöst. Durch die Verwendung von modernen Kunststoffmaterialien wird weiterhin sichergestellt, daß die Geräuschdämpfungsscheiben praktisch verschleißfrei arbeiten können und die erfindungsgemäße Aufgabe wird also auf einfache Art sicher gelöst. Es kann in diesem Zusammenhang von einer idealen Lösung der gestellten Aufgabe gesprochen werden.

Im folgenden wird ein Ausführungsbeispiel der Erfindung anhand von Zeichnungen näher beschrieben. Es zeigen:

Figur 1 schematisch die Antriebswelle eines Gliederförderbandes mit darauf angeordneten Antriebszahnrädern und Geräuschdämpfungsscheiben,

Figur 2 einen Schnitt durch ein Gliederförderband gemäß Figur 1,

Figur 3 eine andere Form der Dämpfungselemente und deren Anordnung auf dem Fördermittel und

Figur 4 einen Schnitt der Anordnung nach Figur 3 entlang der Linie IV—IV.

Gliederförderbänder, wie sie z.B. aus der US—PS—3 785 476 für geraden Verlauf und aus der englischen Patentschrift 1 472 604 für den gekrümmten Verlauf bekannt sind, bestehen aus einer Vielzahl von Moduln oder Platten 4 aus Kunststoff, die über Querstäbe miteinander verbunden sind. Die Querstäbe verlaufen dabei durch Ösen, wobei die Ösen nebeneinander angeordneter Platten ineinander eingreifen.

Der Antrieb der Förderbänder erfolgt durch Zahnräder, bei denen die Zähne entweder an an der Unterseite der Moduln angeordneten Vorsprüngen oder den Ösen angreifen oder in Vertiefungen der Moduln eingreifen. Die Zahnräder sind aus Wellen angeordnet, die mittels herkömmlicher Mittel angetrieben werden. Da ein solcher Antrieb an sich bekannt ist, braucht er nicht weiter beschrieben zu werden. Hinsichtlich der Einzelheiten wird ausdrücklich auf die genannten Patentschriften Bezug genommen.

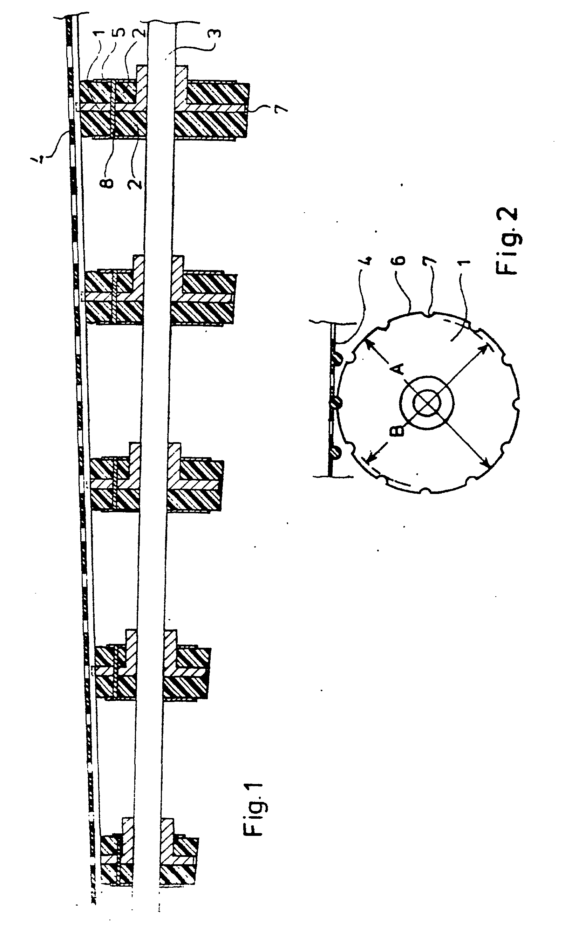

Gemäß den Figuren 1 und 2 sind beidseitig neben den aus vorzugsweise Kunststoff bestehenden Zahnrändern 1 Geräuschdämpfungselemente oder -scheiben 2 angeordnet, deren Breite größer ist, als die Breite der Zahnräder 1 und die aus einem weichen, elastischen Material bestehen. Die Geräuschdämpfungsscheiben 2 bestehen insbesondere aus Schaumstoff, wobei sowohl Gummischaumstoff als auch Kunststoff-Schaumstoff verwendet werden kann. Es ist aber auch die Verwendung von massiven Scheiben möglich, wenn das verwendete Material ausreichend elastisch ist und eine genügend hohe Verschleißfestigkeit aufweist. Die Elastizität wird durch die Verwendung von Schaumstoffen mit gasgefüllten Zellen selbstverständlich erhölt. Die Geräuschdämpfungsscheiben 2 weisen einen Durchmesser auf, der dem Außerdurch messer (A) des von den Zähnen der Zahnräder 1 gebildeten Kreises entspricht und der Durchmesser der Geräuschdämpfungsscheiben 2 ist mindestens größer, als der Durchmesser (I) des Kreises, auf dem die Böden der zwischen den Zähnen 6 gebildeten Nuten 7 liegen.

Außen neben den Geräuschdämpfungsscheiben 2 sind Stützscheiben 5 aus festem Material angeordnet, deren Durchmesser geringer ist, als der Durchmesser (I) der von den Böden der Nuten ß der Zahnräder 1 gebildeten Kreise, so daß sichergestellt wird, daß sich die Außenränder der Geräuschdämpfungsscheiben genügend verformen können, andererseits diese Scheiben aus weichelastischem Material aber ausreichend abgestützt sind.

Gemäß dem Ausführungsbeispiel sind die neben den Geräuschdämpfungsscheiben angeordneten Stützscheiben 5 durch Anker 9 miteinander verbunden, so daß die Zahnräder 1, die Geräuschdämpfungsscheiben 2 und die Stützscheiben 5 eine für sich montierbare Einheit bilden.

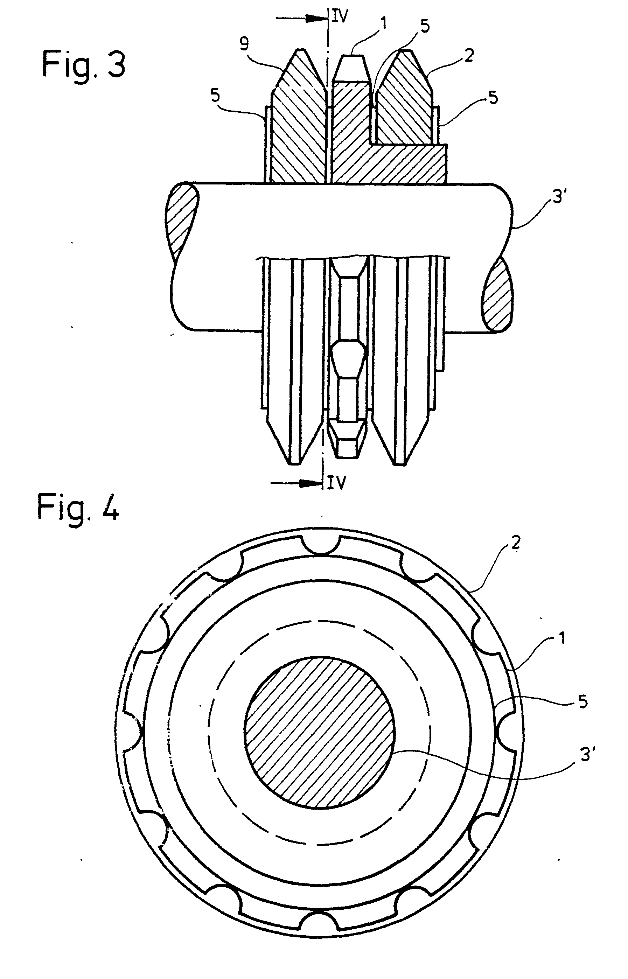

Figur 3 weiterhin zeigt ein als zahnradähnliches Antriebsrad (1) ausgebildetes Teil des Antriebsmittels für das nicht dargestellte Band, das aus scharnierähnlich verbundenen Plattenelementen besteht. Das Abtriebsrad 1 ist fest auf einer angetriebenen Welle 3 montiert, wobei im allgemeinen mindestens zwei Antriebsräder auf einer Welle angeordnet sind. Die Dämpfungselemente 2 bestehen vorteilhafterweise aus zelligem Polyurethan-Elastomer oder Schaumstoff mit einem Druckspannungsmodul von ca. 0,75 N/mm$^2$. Durch die sich radial nach außen verjüngende Materialstärke der Dämpfungselemente 3 wird eine progressive Federkannlinie erreicht. Damit wird bei Beginn des Formschlusses zwischen dem Antriebsrad 1 und dem Plattenelement des Zurorgans eine weiche Federung erreicht. Durch das Eigengewicht des Zugorgans werden die Dämpfungselemente 2 gestaucht und das Plattenelement kann sich zur Zahnung des Antriebsrades 1 ausrichten. Erst nach Eingriff des Plattenelementes in die Zahnung des Antriebsrades wird durch die aus dem Antrieb bzw. aus der Spannung des Fördermittels resultierende Kraft der härtere innere Teil der Dämpfungselemente 2 gestaucht. Die Befestigung der Dämpfungselemente 2 erfolgt durch Verschraubung an dem Abtriebsrad 1 bsw. der Welle 3 unter Verwendung der Stützscheiben 5.

Der in Figur 4 gezeigte Schnitt der Anordnung zeigt, daß das hier nur sichtbare Dämpfungselement 2 über das auf der Welle 3 montiere Antriebsrad 1 hinausragt und daß der Durchmesser der Stützscheiben 5 kleiner als die durch die Zahnung begrenzte maximale Verformung der Dämpfungselement ist. Durch den kleineren Durchmesser der Stützscheiben 5 wird ein Freiraum zwischen den Dämpfungselemente 2 und dem Antriebsrad 1 geschaffen, der die Materialstärkenänderung der Dämpfungselemente 2 bei deren Stauchtung aufnehmen kann.

**Patentansprüche**

1. Modulares Band, bestehend aus einer Vielzahl von platten- oder gitterförmigen Moduln aus Kunststoff, die an zwei gegenüberliegenden Modulädern im Abstand voneinander mehrere geschlossene oder fast geschlossene Ösen aufweisen, die mit den Moduln eine Einheit bilden und jeweils in die Zwischenräume zwischen den Ösen benachbarter Modulen einschiebbar sind und mit diesen durch Querstäbe zum Band verbunden sind, wobei der Antrieb des Bandes durch Zahnräder erfolgt, die auf angetriebenen Wellen angeordnet sind und deren Zähne an an der Unterseite der Moduln angeordneten Vorsprüngen oder an den Ösen angreifen oder in Vertiefungen der Moduln eingreifen,

dadurch gekennzeichnet, daß neben den Zahnrädern (1) Geräuschdämpfungsscheiben (2) aus leicht elastisch verformbaren Material angeordnet sind, deren Durchmesser mindestens dem Außendurchmesser (A) des von den Zähnen der Antriebsräder (1) gebildeten Kreises entspricht, wobei die Geräuschdämpfungsscheiben (2) aus gasgefüllte Zellen enthaltendem Kunststoff bestehen und außen neben den Geräuschdämpfungsscheiben (2) Stützscheiben (5) aus festem Material angeordnet sind, deren Durchmesser geringer ist als der Durchmesser (I) des von den Böden der Nuten (7) der Zahnräder (1) gebildeten Kreises.

2. Modulares band nach Anspruch 1, dadurch gekennzeichnet, daß die Geräuschdämpfungsscheiben beidseitig jedes Antriebszahnrades (1) angeordnet sind.

3. Modulares Band nach einem der Ansprüche 1 oder 2, dadurch gekennzeichnet, daß die Breite der Geräuschdämpfungsscheiben wesentlich größer ist als die Breite der Antriebszahnräder.

4. Modulares Band nach Anspruch 1 bis 3, dadurch gekennzeichnet, daß die Dämpfungselemente (2) in Form von Rohrabschnitten aus Kunststoff auf den Antriebsmitteln aufgebracht sind.

5. Modulares Band nach Anspruch 1 bis 4, dadurch gekennzeichnet, daß die Dämpfungselement (2) in radialer Richtung eine progressive Federkennlinie aufweisen.

6. Modulares Band nach Anspruch 1 bis 5, dadurch gekennzeichnet, daß der Kunststoff der Dämpfungselemente (2) zelliges Polyurethan-Elastomer ist.

7. Modulares Band nach Anspruch 6, dadurch gekennzeichnet, daß die progressive Felderkennlinie der Dämpfungselemente (2) durch eine radial nach außen verjüngte Materialstärke erreicht ist.

**Revendications**

1. Bande modulaire, constituée par une pluralité de modules en matière plastique qui sont en forme de plaques ou de grilles et présentent, en deux bords en vis-à-vis, plusieurs yeux à contour fermé ou presque fermé, séparés les uns des autres par un intervalle, formant une unité avec les modules et aptes à s'introduire dans les intervalles entre les yeux de modules voisins auxquels ils sont assemblés par des tiges transversales, pour constituer une bande, l'entraînement de cette bande s'effectuant par des roues dentées agencées sur des arbres entraînés, les dents de ces roues attaquant lesdits yeux ou des reliefs agencés sur le côté inférieur des modules, ou s'engageant dans des dépressions des modules, caractérisée par le fait qu'à côté des roues dentées (1) sont agencées des disques amortisseurs de bruit (2) faits d'un matériau facilement déformable élastiquement et dotés d'un diamétré qui correspond au moins au diamètre extérieur (A) de cercle formé pr les dents des roues d'entraînement (1), ces disques amortisseurs de bruit (2) étant en matière plastique à cellules remplies de gaz, et des disques d'appui (5) en matière résistante étant agencés extérieurement à côté des disques amortisseurs de bruit (2) et ayant un diamètre plus petit que le diamètre (B) du cercle formée par les fonds des rainures (7) des roues dentées (1).

2. Bande modulatire selon revendication 1, caractérisée par le fait que les disques amortisseurs de bruit sont agencés de part et d'autre de chaque roue d'entraînement (1).

3. Bande modulaire selon l'une des revendications 1 ou 2, caractérisé par le fait que la largeur des disques amortisseurs de bruit est sensiblement plus grande que la largeur des roues d'entraînement.

4. Bande modulaire selon revendication 1 à 3, caractérisée par le fait que les éléments amortisseurs (2), sous la forme de portions de tube de matière plastique, sont rapportés sur les moyens d'entraînement.

5. Bande modulaire selon revendication 1 à 4, caractérisée par le fait que les éléments d'entraînement (2) présentent, en direction radiale, une carctéristique élastique progressive.

6. Bande modulaire selon revendication 1 à 5, caractérisée par le fait que la matière plastique des éléments amortisseurs (2) est un élastomère cellulaire au polyuréthane.

7. Bande modulaire selon revendication 6, caractérisée par le fait que la caractéristique élastique progressive des éléments amortisseurs (2) est obtenue par une épaisseur de matière diminuant radialement vers l'extérieur.

**Claims**

1. A modular belt, consisting of a plurality of plate- or grid-shaped plastic modules which have several closed or almost closed eyes at a distance from each other on two opposing module edges, which eyes together with the modules form a unit and in each case can be inserted into the spaces between the eyes of adjoining modules and are connected thereto by transverse bars to form a belt, the belt being driven by toothed wheels which are arranged on driven shafts and the teeth of which engage on projections arranged on the underside of the modules or engage on the eyes or engage in recesses in the modules, characterised in that noise-damping discs (2) made of easily elastically deformable material are arranged next to the toothed wheels (1), the diameter of which discs corresponds at least to the external diameter (A) of the circle formed by the teeth of the drive wheels (1), the noise-muffling discs (2) consisting of plastic containing gas-filled cells and supporting discs (5) of solid material being arranged externally next to the noise-muffling discs (2), the diameter of which supporting discs is less than the diameter (I) of the circle formed by the bases of the grooves (7) of the toothed wheels (1).

2. A modular belt according to Claim 1, characterised in that the noise-muffling discs are arranged on both sides of each toothed drive wheel (1).

3. A modular belt according to one of Claims 1 or 2, characterised in that the widths of the noise-muffling discs are substantially greater than the width of the toothed drive wheels.

4. A modular belt according to Claims 1 to 3, characterised in that the muffling elements (2) are mounted on the drive means in the form of plastic tubular sections.

5. A modular belt according to Claims 1 to 4,

EP 0 068 475 B1

characterised in that the muffling elements (2) have a progressive spring characteristic in the radial direction.

6. A modular belt according to Claims 1 to 5, characterised in that the plastic of the muffling elements (2) is cellular polyurethane elastomer.

7. A modular belt according to Claim 6, characterised in that the progressive spring characteristic of the muffling elements (2) is achieved by a thickness of material which tapers radially outwards.

Fig. 1

Fig. 2

EP 0 068 475 B1

Fig. 3

Fig. 4